**Europäisches Patentamt**

**European Patent Office**

**Office européen des brevets**

(19)

(11) Veröffentlichungsnummer: **0 029 980**
**A2**

(12) # EUROPÄISCHE PATENTANMELDUNG

(21) Anmeldenummer: **80107299.2**

(22) Anmeldetag: **29.11.80**

(51) Int. Cl.³: **B 23 B 47/34**
**B 23 Q 11/00**

(30) Priorität: **29.11.79 DE 2948006**

(43) Veröffentlichungstag der Anmeldung:
**10.06.81 Patentblatt 81/23**

(84) Benannte Vertragsstaaten:
**AT BE CH FR GB IT LI NL SE**

(71) Anmelder: **Volkmann, Jürgen**
**Zum Vulting 10**
**D-4777 Schwefe/Soest(DE)**

(72) Erfinder: **Volkmann, Jürgen**
**Zum Vulting 10**
**D-4777 Schwefe/Soest(DE)**

(74) Vertreter: **Beyer, Werner, Dipl.-Ing.**
**Staufenstrasse 36, II P.O. Box 174109**
**D-6000 Frankfurt/Main(DE)**

(54) Verfahren und Vorrichtung zum Entfernen fester oder flüssiger Rückstände aus Hohlräumen wie Bohrungen oder dergleichen.

(57) Feste oder flüssige Rückstände in Hohlräumen wie beispielsweise Bohr- und Gewindeschneidspäne sowie beim Bohren oder Fräsen verwendete Kühl- und Schmierflüssigkeiten werden erfindungsgemäß dadurch entfernt, daß ein unter Druck stehendes Gas als eng gebündelter Strom in den Hohlraum eingeblasen und aus dem Hohlraum über dessen vollen Öffnungsquerschnitt geführt abgesaugt wird. Dadurch wird vermieden, daß die abzuführenden Fremdkörper frei durch die Atmosphäre wirbeln und die Bedienungsperson gefährden. Eine hierfür geeignete Vorrichtung besteht aus einem gegen die Hohlraumöffnung anstellbaren Saugrohr, in welchem mindestens ein in den Hohlraum einführbares Blasrohr angeordnet ist. Besonders zweckmäßig ist die Ausbildung des Saugrohrs als Ejektor mit der Möglichkeit, das eingeblasenen Gas vom Arbeitsgas des Ejektors abzuzweigen.

./...

EP 0 029 980 A2

Patentanwälte

Dipl.-Ing. W. Beyer

Dipl.-Wirtsch.-Ing. B.Jochem

Frankfurt/Main                                 Staufenstraße 36

0029980

Anm.: Jürgen Volkmann
      Zum Vulting 1o
      4777 Schwefe/Soest

Verfahren und Vorrichtung zum
Entfernen fester oder flüssiger
Rückstände aus Hohlräumen wie
Bohrungen oder dergleichen.

Die Erfindung betrifft ein Verfahren zum Entfernen fester
oder flüssiger Rückstände aus Hohlräumen unter Verwendung eines unter Druck stehenden Gases, insbesondere Druckluft,
sowie eine Vorrichtung zur Durchführung eines solchen Verfahrens.

Bei der Herstellung von Hohlräumen in industiellen Fertigungsprozessen entstehen durch Materialabtragung am Werkstück und/
oder Abnutzung des Werkzeugs sowie anderer Bearbeitungshilfsmittel vielfach Rückstände, deren Beseitigung aus den
Hohlräumen dringend erwünscht ist. So verbleiben beispielsweise beim Bohren und Gewindeschneiden von Sacklöchern und
beim Fräsen von Nutenspäne in diesen Hohlräumen zurück, die
vor allem beim Stahl wegen der magnetischen Eigenschaften des
Materials ein beträchtliches Haftungsvermögen besitzen. Da
das Bohren bzw. Fräsen vielfach auch unter Verwendung von
kühlenden und schmierenden Flüssigkeiten erfolgt, bilden auch diese Rückstände in den Hohlräumen, die entfernt werden müssen.

Bisher hat man derartige Rückstände mit einem unter Druck
stehendes Gas, vor allem Blasluft durch Ansetzen einer an
einem SChlauch befestigten Blasdüse zu entfernen versucht.
Dabei besteht jedoch die Gefahr, daß die Späne ins menschliche

JV 8993 HG/7.11.1979

Auge gelangen, so daß dieses Ausblasen mit Schutzbrille vergenommen werden sollte. Auch fallen die herausgeblasenen Späne
und Flüssigkeitspartikel oft in dieselbe oder eine andere
Bohrung zurück, so daß zur vollständigen Reinigung eines
Werkstücks doe einzelnen Hohlräume mehrfach ausgeblasen werden müssen.

Es ist auch bereits versucht worden, die Hohlräume auszusaugen,
indem beispielsweise das Ende eines Saugschlauchs an die Hohlraumöffnung angehalten wird. Der Erfolg dieser Maßnahme ist
jedoch recht unsicher und bedarf einer großen Geschicklichkeit,
weil zu Erziehung des erforderlichen Unterdrucks ein Drosselspalt zwischen der Saugschlauchmündung und der zu reinigenden
Oberfläche bzw. dem zu reinigenden Hohlraum aufrecht erhalten werden muß.

Der Erfindung liegt deshalb die Aufgabe zugrunde, ein Verfahren
zum Entfernen fester oder flüssiger Rückstände aus Hohlräumen
sowie eine zur Durchführung eines Solchen Verfahrens geeigneten Vorrichtung zu schaffen, die die vorstehend erwähnten
Nachteile sowohl des Ausblasens als auch des Aussaugens vermeidet.

Ausgehend von einem Verfahren unter Verwendung eines unter Druck
stehenden Gases, insbesondere Druckluft, löst die Erfindung
diese Aufgabe verfahrensmäßig dadurch, daß das Gas als enggebündelter Strom in den Hohlraum eingeblasen und aus dem Hohlraum über dessen vollen Öffnungsquerschnitt geführt abgesaugt
wird.

Die Erfindung kombiniert somit das bekannte Blasen mit dem
Saugen, wobei das hereingeblasene Gas wieder herausgesaugt
wird, ohne daß es einer Steuerung des Unterdrucks durch eine
der Geschicklichkeit der Bedienungsperson überlassene Drosselung bedarf. Durch das geführte Absaugen des Gases aus dem
Hohlraum wird zugleich sichergestellt, daß die abzuführenden
Fremdkörper nicht frei durch die Atmosphäre wirbeln und die
Bedienungsperson gefährden.

JV 8993 HG/ 7.11.1979

Zweckmäßig wird der gebündelte Gasstrom gegen den Boden des Hohlraums gerichtet, wobei es besonders vorteilhaft ist, wenn der Gasstrom im Wesentlichen gegen die Bodenmitte gerichtet wird. Dadurch wird erreicht, daß sich der Gasstrom gleimäßig nach allen Richtungen am Boden verteilt und mit ihm die Rückstände aus allen Bereichen des Hohlraums abgesaugt werden.

Nach einem anderen Merkmal zur vorteilhaften Ausgestaltung der Erfindung sollte die Absaugung mit einer solchen Intensität vorgenommen werden, daß der Druck im Hohlraum unter dem Atmosphärendruck liegt. Um dies zu fördern ist es weiterhin zweckmäßig, wenn die Einblasung des Gases gegenüber der Absaugung mit Verzögerung und/oder regelbaren Intervallen erfolgt.

Eine Vorrichtung zur Durchführung des erfindungsgemäßen Verfahrens zeichnet sich entsprechend durch ein gegen die Hohlraumöffnung anstellbares Saugrohr aus, in welchem mindestens ein in den Hohlraum einführbares Blasrohr angeordnet ist. Dabei kann das Saugrohr zur Erzielung der gewünschten Abdichtung mit einem gegen die hohlraumöffnung dichtenden elastischen Kragen versehen sein, welcher zweckmäßig im Verhöltnis zum Saugrohr verschieblich ist.

Ein anderes Merkmal zur vorteilhaften Ausgestaltugn der erfindungsgemäßen Vorrichtung sieht vor, daß das Blasrohr das Saugrohr mittig durchsetzt.

Um die erfindungsgemäße Vorrichtung an verschiedene Lochtiefen anpassen zu können, ist es weiterhin von Vorteil, wenn das Blasrohr im Verhältnis zum Saugrohr axial verschieblich angeordnet ist. Hierzu kann das Blasrohr zweckmäßig als Teleskoprohr ausgebildet sein.

Noch ein anderes Ausgestaltungsmerkmal der erfindungsgemäßen Vorrichtung zeichnet sich dadurch aus, daß das Blasrohr am Ende eine Düse trägt.

Die Erzeugung des erforderlichen Unterdrucks kann an das Saugrohr ein Unterdruckerzeuger angeschlossen sein. Besonders vor-

JV 8993 HG / 7.11.1979

teilhaft ist es jedoch, das Saugrohr selbst als Ejektor auszubilden, wobei sich die Möglichkeit bietet, das eingeblasene Gas vom Arbeitsgas des Ejektors abzuzweigen. Zweckmäßig sollten jedoch die Einblasung und die Absaugung getrennt voneinander stufenlos regelbar sein. Andererseits können jedoch
die Einblasung und die Absaugung durch ein gemeinsames Steuerventil ausschaltbar sein.

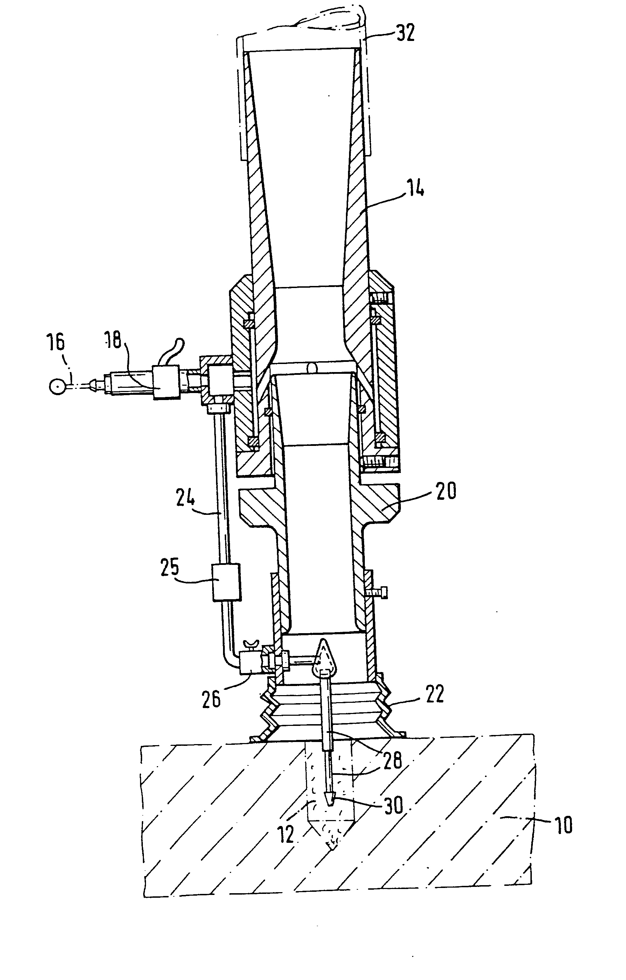

Ein bevorzugtes Ausführungsbeispiel der Erfindung wird nachstehend in Verbindung mit der Zeichnung näher erläutert,
welche im Axialschnitt eine Vorrichtung zur Durchführung
des erfindungsgemäßen Verfahrens unter Verwendung eines als
Ejektor ausgebildeten und auch Druckluft betriebenen Saugrohrs in Anwendung bei einem zu reinigenden Bohrloch zeigt.

In der Zeichnung ist mit 1o ein plattenförmiges Werkstück
bezeichnet, in welches ein Sachloch 12 gebohrt ist, das von
den beim Bohren entstandenen Bohrspänen sowie dem dabei verwendeten Bohröl gereinigt werden soll.

Die hierzu verwendete Vorrichtung ist ein in seiner Gesamtheit mit 14 bezeichneter Ejektor, dem von der Seite her über
eine Leitung 16 mit einem Handventil 18 Druckluft zugeführt wird,
die auf Grund der düsenförmigen Ausbildung im Inneren des
Ejektorseine nach aufwärts gerichtete Saugluftströmung durch
den Ejektor bewirkt. Die Intensität dieser Strömung kann durch
einen das untere Ejektorende bildenden Regulierring 2o verändert werden, auf welchem ein Schutzrohr mit einem Balg 22
zur Verstellung des Abstandes gegenüber dem Werkstück angeordnet ist.

Von der Leitung 16 zweigt hinter dem Handventil 18 eine Leitung 24 mit Impulsventil 25 und einem Regulierventil 26 ab,
die zu einem koaxial im Ejektor angeordneten Blasrohr 28 führt,
das an seinem Ende mit einer Düse 3o versehen ist. Das Blasrohr
28 läßt sich zur Anpassung an unterschiedliche Bohrungstiefen
teleskopartig ausziehen.

JV 8993 HG/ 7.11.1979

**0029980**

Die erfindungsgemäße Vorrichtung arbeitet wie folgt:
Zunächst wird das Blasrohr 28 derart im Verhältnis zum Schutzrohr 22 eingestellt, daß die Düse 3o über die Vorderkante des
Schutzrohrs der Tiefe des zu reinigenden Bohrlochs entsprechend
übersteht. Dann wird die Vorrichtung mit dem Schutzrohr gegen
die Oberfäche des Werkstücks angesetzt, wobei des Blasrohr 28
mit der Düse 3o in dei zu reinigende Bohrugn ragt. Nun wird
das Handventil 18 geöffnet, wodurch Druckluft in den Ejektor
gelangt und durch diesen einen Saugluftstrom hervorruft. Gleichzeitig oder Zeit verzögert strömt Druckluft kontinuierlich
oder in Impulsen durch die Zweigleitung 24 zu dem Blasrohr 28
und wird durch die Düse 3o gebündelt gegen den Boden der Bohrung geblasen, wo sie umgelenkt wird und unter der Saugwirkung
des Ejektors die in der Bohrung enthaltenen Späne und/oder Bohrflüssigkeit herausbefördert und durch den Ejektor und eine daran
angeschlossene Förderleitung 32 abführt.

Durch verstellen des Regulierventils 26 und des Regulierrings
2o können der Blasluftstrom und der Saugluftstrom derart aufeinander abgestimmt werden, daß in gewünschter Weise in den
Wandungsbereichen des Bohrlochs 12 ein Unterdruck entsteht.
Außerdem gestattet die stufenlose Verstellbarkeit des Regulierventils 26 und des Regulierrings 2o die Einstellung der Ströme
auf die gerade notwendige Größe, wodurch unnötige Energie
eingespart werden kann.

Patentansprüche
────────────────

JV 8993 HG / 7.11.1979

0029980

## Patentansprüche

1. Verfahren zum Entfernen fester oder flüssiger Rückstände aus Hohlräumen unter Verwendung eines unter Druck stehenden Gases, insbesondere Druckluft, d a d u r c h   g e k e n n z e i c h n e t, daß das Gas als enggebündelter Strom in den Hohlraum eingeblasen und aus dem Hohlraum über dessen vollen Öffnungsquerschnitts geführt abgesaugt wird.

2. Verfahren nach Anspruch 1, d a d u r c h   g e k e n n - z e i c h n e t, daß der gebündelte Gasstrom gegen den Boden des Hohlraums gerichtet wird.

3. Verfahren nach Anspruch 2, d a d u r c h   g e k e n n - z e i c h n e t, daß der Gasstrom im Wesentlichen gegen die Bodenmitte gerichtet wird.

4. Verfahren nach einem der Ansprüche 1 bis 3, d a d u r c h   g e k e n n z e i c h n e t, daß die Absaugung mit einer solchen Intensität vorgenommen wird, daß der Druck einen Hohlraum unter dem Atmosphärendruck liegt.

5. Verfahren nach einem der Ansprüche 1 bis 4, d a d u r c h   g e k e n n z e i c h n e t, daß die Einblasung des Gases mit Verzögerung gegenüber der Absaugung und/oder in Intervallen erfolgt.

6. Vorrichtung zur Durchführung des Verfahrens nach einem der Ansprüche 1 bis 5, g e k e n n z e i c h n e t   d u r c h   ein gegen die Hohlraumöffnung anstellbares Saugrohr, in welchem mindestens ein in den Hohlraum einführbares Blasrohr (28) angeordnet ist.

7. Vorrichtung nach Anspruch 6, d a d u r c h   g e k e n n - z e i c h n e t, daß das Saugrohr mit einem gegen die Hohlraumöffnung dichtenden elastischen Kragen (22) versehen ist.

JV 8993 HG/   7.11.1979

8.  Vorrichtung nach Anspruch 7 d a d u r c h  g e k e n n -
    z e i c h n e t, daß der Kragen im Verhältnis zum Saugrohr
    verschieblich ist.

9.  Vorrichtung nach einer der Ansprüche 6 bis 8, d a d u r c h
    g e k e n n z e i c h n e t, daß das Blasrohr (28) das
    Saugrohr mittig durchsetzt.

1o. Vorrichtung nach einem der Ansprüche 6 bis 9, d a -
    d u r c h  g e k e n n z e i c h n e t, daß das Blas-
    rohr (28) im Verhältnis zum Saugrohr axial verschieblich angeordnet ist.

11. Vorrichtung nach Anspruch 1o, d a d u r c h  g e k e n n -
    z e i c h n e t, daß das Blasrohr (28) als Teleskoprohr ausgebildet ist.

12. Vorrichtung nach einem der Ansprüche 6 bis 11,
    d a d u r c h  g e k e n n z e i c h n e t, daß das
    Blasrohr (28) am Ende eine Düse (3o) trägt.

13. Vorrichtung nach einem der Ansprüche 6 bis 12,
    d a d u r c h  g e k e n n z e i c h n e t, daß das
    Saugrohr als Ejektor (14) ausgebildet ist.

14. Vorrichtung nach Anspruch 13, d a d u r c h  g e k e n n -
    z e i c h n e t, daß das eingeblasene Gas vom Arbeitsgas des Ejektors abgezweigt ist.

15. Vorrichtung nach Anspruch 14, d a d u r c h  g e k e n n -
    z e i c h n e t, daß die Einblasung und die Absaugung
    getrennt voneinander  stufenlos regelbar sind.

JV 8993 HG/ 7.11.1979

16. Vorrichtung nach Anspruch 15, d a d u r c h  g e k e n n -
z e i c h n e t, daß die Einblasung und die Absaugung durch
ein gemeinsames Steuerventil (18) ein- und ausschaltbar
sind.

JV 8993 HG/ 7.11.1979